# EUROPEAN PATENT APPLICATION

(11) **EP 1 746 484 A1**
(43) Date of publication of application: **24.01.2007**
(21) Application number: 05425521.1
(22) Date of filing: 20.07.2005
(51) Int. Cl.: G06F 3/023

(54) **Electronic interface for a menu sheet**

(71) Applicant: DR Group s.r.l., 000134 Roma (IT)
(72) Inventor: Giannetti Rocco, Claudio, 00012 Guidonia Montecelio (RM) (IT)

(57) **Abstract**

The device "Menú Informatico" represents a peripheral that can be inserted in a known electronic system for performing functions equivalent to those of a Palm Pilot (Personal Computer), oriented to specialised operative uses and aspects, not satisfactorily executed by the normal Palm Pilots.
It comes with the characteristics of a diary, Fig.1 and its use is specifically oriented to personnel with limited education and subject to frequent turnover, so much as to not being able to dedicate time to the knowledge of the device. Consequently its use is intuitive.
The most frequent utilisation of the device is recognised in the taking of orders in the Refreshments secto, in the acquisition of information on consumption and activities in the Hotel sector, in the quality control activities of industrial products, etc.
In more general terms it can be said that the "Menú Informatico", allows an operator to acquire known and repetitive information described in opportune modality on *N* pages in progressive order.
By definition, the data and/or items to be treated are made known to the whole System and consequently even the Peripheral "Menu Informatica"; or rather to its memory and in a clear and descriptive form reproduced on the Hard pages (8) as in a normal List or Menu.

The pages containing the writing lines, on the "front" and on the "back", always assume a constant aligning position of the writing lines themselves with the keys of a keyboard with a double row of anonymous vertical keys. The position of the keyboard is central with respect to the "front" pages and the "back" pages such that at every description of the data there is a corresponding operating key. This is obtained by attributing spaces containing writing lines characterised by space ordinates (A,B,C,....*N*) each one flanked by a corresponding key of the same ordinate (A,B,C,...*N*) to each page "front" and "back".
The constituent pages of the sheets, are inserted in transparent plastic envelopes (7) because of mechanical management needs, they are asily Turnable as sheets of a normal rim. The selected sheet, with suitable means, signals the pages described in it whose page ordinates becomes acquired automatically by the device with the switching on of the selected key.
Consequently, the device allows the Computerised acquisition of data or item N described on page *N* by the typing of only one key from a keyboard that has a limited number of keys.

As an example, in the case of an Order, the operations executed by the operator, waiter, are:
• Type the table number to which the Order is referred, using the numeric keyboard (3);
• Search the requested course on the pages;
• Type the operating key of the keyboard (4), corresponding to the meal, as many times as the quantity required. The operation is completed/concluded.

With a specific key, forward the order via radio to the production area.

## Description

The invention so called "Menú Informatico" represents a **Peripherical Unit inserted** in a known **Electronic System**, whose minimum composition includes:

A Personal computer, other peripherals, means of connection via radio, the Procedures of the predisposition of the data and the items to be treated, the designated Software and Firmware.

In relation to the knowledge at our disposal, the Peripheral Units that can carry out functions similar to this invention are those made up by the Palm Pilot Personal computers, which the invention is exclusively compared with for the specific sector utilization, to improve and amplify its performance.

In general, such devices end up being inadequate and difficult if destined to under-trained personnel, subject to high turn over. Furthermore, they require important ergonomic functions; operation of the designated controls, good vision, good lighting of the establishment. In particular, the disadvantages that need to be overcome are:
- Non intuitive use with **training** required;
- The typing of the controls and the data that require the help of an appropriate **Stylus.**
- The reduced working surface which is not always easily perceptible by the employees and is still worse particularly in less-lit conditions;
- The frequency of radio transmissions close to mobile phones with susceptibility to disturbance;
- Inappropriate weight in respect to the dimensions with outcomes of a destructive nature in case of a fall;
- Can be easily stolen having been destined to a wide range of uses.

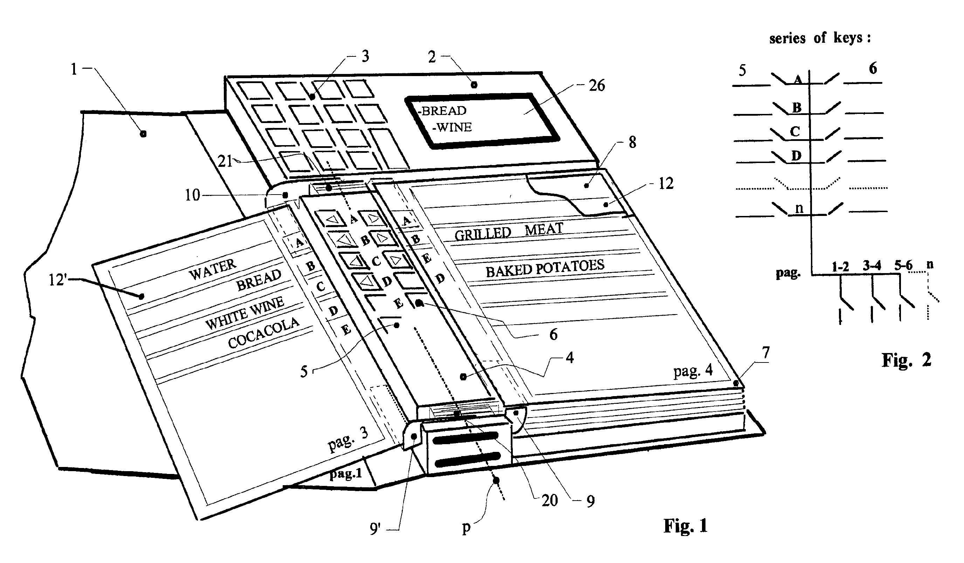

The "Menú Informatico" as in Fig. 1 is made of a known electronic base, inserted in a body (2), in which the other devices for executing the already existing functions are located. The whole body is suitably placed in a normal cover (dust-jacket).

According to definition, the data and/or items to be treated, are **known to the whole system**, in particular to the peripheric "Menú Informatico" manages the data in two characteristic ways:
- In the **memory** the items are marked by **coordinates,** referring respectively to the Space (12) occupied in one sheet of paper (8), and to the **page number** (Pag. 1, Pag. 2, Pag.3 ....Pag.*n*) that contains them.
- On the **hard pages,** the items are presented in a descriptive form on sheets of paper (8) inserted in transparent envelopes, clearly legible by an operator on the same coordinates with which the item is memorized.

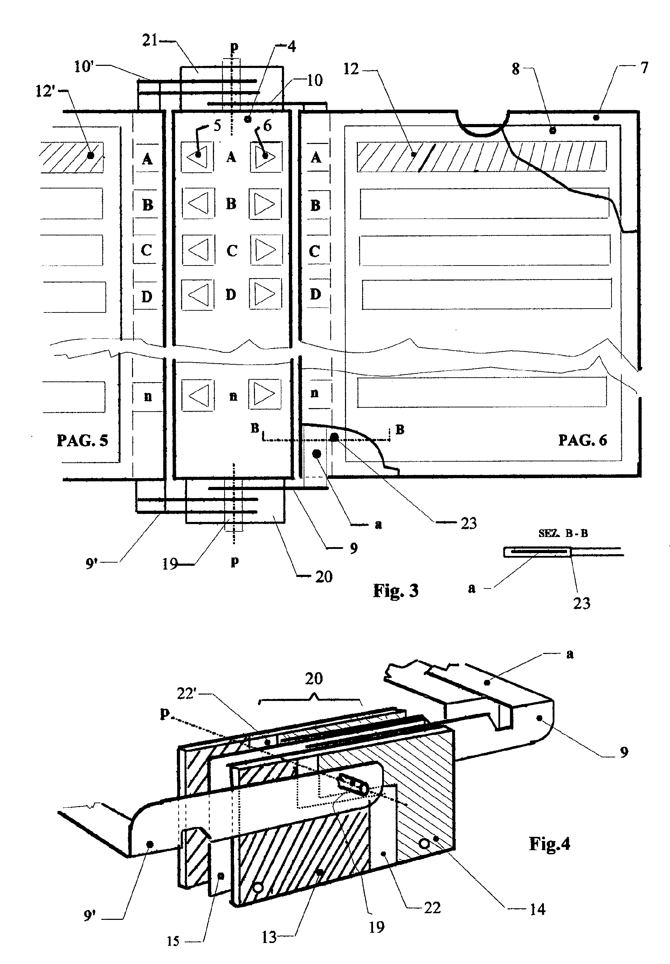

To allow an operator immediate electronic acquisition of a chosen item, the device is availed by the characteristic articulation of some basic components established by:
- **Sheets of Paper** containing, in the respective pages (8), the description of the items to be acquired;
- **Operating keyboard** (4) fig.3, located between the Front page and Back page of a sheet of paper, made of two series of keys (5,6);
- Transparent **Plastic envelopes** (7) in which the sheets of paper are inserted;
- **Brackets** (9,10) with the functions of: **holding the envelopes** for the Page Turner, **aligning** of the spaces to the operating keys, **automatic markers** of the sheets of paper or rather of the pages that are to be read by the operator.

The said devices carry out their functions as follows:

**The Sheets** of paper are characterized by **pages** (8), Front and Back Fig. 3, divided into **"Spaces** (12) at a constant pace, each one of which can receive defined lines of writing representing the **items** or the **data** to be treated. Each space is defined by an ordinate of **Space**, fictitious, progressive (A,B,C, .....*n*).
The Space ordinate and the one of the page, correspond to the **coordinates** that identify unequivocally the item or the data in the memory of the device. Precisely:

| | | |
|---|---|---|
| A ― pag.1, | B ― pag.1, | C ― 1,.... Space *N* ― pag.1 |
| A ― pag.2, | B ― pag.2, | C - 2,.... Space *N* ― pag.2 |
| A ― pag.3, | B ― pag.3, | C ― 3,.... Space *N* ― pag.3 |
| A ― pag.*N*, | B ― pag.*N*, | C *― N,....* Space *N ―* pag.*N* |

The coordinates shown above are signalled and acquired through the series of keys (5,6) destined to the Front page and Back page spaces respectively. **The series of the keys** are likewise, characterised by:
- The constant vertical step is equal to the one of Spaces (12), containing the items to be treated/managed;
- **Their anonymity** due to the fact that they refer to different items contained by the *N* pages, but conventionally, they assume the same denomination and electronic **function** of the content described in Space (A,B,C...*N*) when together with the Space ordinate, even the one of the page is also signalled. (Pag.1, Pag.2, Pag.3, ....*N*).

**In fact each key that is switched on** closes an electrical circuit of a known key fig. 2, that makes it possible to acquire the **Space ordinate** and **the page Ordinate**, which is at the time activated for the operator's reading, simultaneously as reported above.

**The sheets of paper**, with the related pages, are inserted in the transparent **Plastic Envelopes** (7) from which they receiving mechanic consistency for their management. In that case, the envelope assumes the same function as a sheet of paper and can be managed as such for the following characterisations:
A buttonhole has been cut in the space correspondent to one of the lateral sides of the envelope (23) for the anchorage of the envelope itself to two metallic brackets (9, 10), through the appendices (a) inserted in the buttonhole (23).
**The two metallic brackets** (9,10), positioned one at the base and one at the top of the envelope, are hinged on the respective hinges (19) located on the central axis (p) of the keyboard (4) with the possibility of allowing a rotation of 180degrees by the envelope around the keyboard (4). The configuration described allows the envelopes, through the brackets, to accomplish different functions characteristic to the invention.
   - **Page turning** is performed by simply turning the envelope from one side of the keyboard to the other;
   - The **front pages** (Pag.6) represent the Space ordinates (A,B,C, ..... *N*) in correspondence to the series of keys (6) in such a way that typing one of these keys is equivalent to typing the contents of the Spaces (12') adjacent to it;
   - The **back pages** represent the space ordinates (A,B,C,...*N*) in correspondence to the series of keys (5) in such a way that typing one of these keys is equivalent to typing the contents of the Spaces (12') adjacent to it;
   - **Signalling of the sheet,** or rather the activated page (pag.1, pag.2, pag.3,.... Pag.*N*) available for reading by means of known devices. In this device the **signalling** is obtained by means of the brackets (9) that when in relaxed position, are always in contact with one of the **two isolated metallic and adjacent** surfaces (13,14) Fig. 4 of the printed circuit (22). Turning the bracket around brings it from the relaxed position to the activated one (9'), producing the closing of the circuit between the two surfaces (13,14), whose electrical signal is consequently brought from level 0 to 1 and will be ready to be activated automatically by the typing of one of the operating keys (5,6).

Given the above information it can be deduced that the functioning of the device for the operator is extremely simple.
In fact, the operations to be executed by the operator for the acquisition of the items already arranged on the device as a **Whole** are:
- **Type** on a wide numeric keyboard (3), the code or the name to which the marked subsequent data as a whole will be referred.
- **Research** on pages (8) available **the item to be acquired,** hence **type the** corresponding key on the keyboard (4), as many times as the quantity requested.

**The information is received in the memory and recorded**. To order more items, the research is repeated on the pages, and then type the corresponding key for the acquisition.
The of the items is carried out by simply **turning** the pages (8), or rather the transparent envelopes (7) that contain them: each acquired item gets highlighted for checking on the display (26). At the end of the operation, the data get transmitted via radio using the appropriate operating key on the keyboard to the Personal computer for eventual utilisation.

From the description just made, the advantages that the device introduces become evident, in particular Fig.1:
- The commands are intuitive, reduced to the minimum and in ergonomic dimensions, Fig. 1;
- The descriptions of the items to be acquired are wide and **adjusted** to the single requirements;
- The quantity of viewable items by an operator "**at a glance**" is high, being able to display wide spaces and **above all on two pages**;
- **The page turning** is accomplished in a natural way and offers the possibility of exploring rapidly, a large volume of items that are not obtainable by scrolling up and down on a small screen of a Palm Pilot;
- Being a device created for specific use, it does not provoke inclinations of being stolen;
- The dimensions adjusted to the use, the supporting cover (dust-jacket) protects the apparatus even in the event of a fall.

Fig.1 illustrates one of the forms of use of the device that represents a way of actualising the invention: **the collection of orders in restaurants**. In that case the operator is the waiter who has to satisfy the clients' orders. To start his work, the employee checks that:
The apparatus has received the menu of the day in its memory via radio;
The courses (of the meals) inserted in the pages, correspond exactly to those memorised and that the pages inserted in the **envelopes** (7) are arranged in the right sequence;
The switching on of one of the operating keys (5,6) effectively highlights the course being referred to. Then the device is ready to take orders.

To take an order, the waiter has to:
- **Type the table number** to which the order is referring using the numeric keyboard (3) (or the name of the client if the keyboard is also adapted to letters;
- **Research** on the pages (8) for the **course requested;**
- **Type the operating key** from the keyboard (4), corresponding to the course, as many times as number requested.

### The acquisition of the order is completed.

The research of meals described on other pages of the "Menú Informatico" is carried out by simply **turning** the pages (8), or rather the transparent envelopes (7) that contain them. Each item acquired is highlighted on the display for control (26).
At the end of the ordering, the operator, with the appropriate key on the keyboard (3), forwards the order via radio, to the Personal Computer that will sort it and send it out to the respective production centre.

In the case specifically illustrated in Fig. 1, the waiter, after indicating the number of the table to which the order is referring, orders BREAD, by typing the key corresponding to (C) from the key series (5), orders WINE by typing the corresponding key (D) of the key series (5) orders two meals of GRILLED MEAT by typing the corresponding key (B) of the key series (6) twice.
Successive orders for the same table can be acquired by simply typing the table number and adding the rest of the orders.

A further example of utilisation of this device regards the **acquisition of activities and consumption** related to **Hotel** environments, for example the **rearrangement of the rooms**.
Even in this case, the data and /or the items to be treated are known in the whole System and to the Peripheric "Menú Informatico"; in a **clear** descriptive form on the pages of the **hard copy** (8). In that case, a "Menú Informatico" in which the **computerised activities** are listed, will be entrusted to waiter, for example:
- **In some pages**, the refreshment items contained in the Fridge BAR **are indicated**;
- **In other pages** the items related to Bathroom consumption, distinguishing how much is chargeable to client and how much at general cost;
- **In others**, the items of room rearrangement, as also with the items for the laundry services and other services provided to the client;
- **In other pages, meals that can be served in rooms**;

The acquisition and treatment of the above-mentioned data takes place with the same simple procedure as described previously.

### DESCRIPTION OF THE DRAWINGS

### Drawing 1/3 containing Figure1 and Figure2.

**Figure 1** provides a panoramic form of the "Menú Informatico" realisation in which the principal components and their ergonomic articulations are highlighted.

On the body (2), the suitable electric circuits are arranged, a keyboard (3) with ten numeric keys and functional keys; a keyboard (4) consisting of two series of vertical keys (5) and (6) which are anonymous, but conventionally dominant for each series (A, B, C, .... *N*). Likewise, *N* transparent plastic envelopes are indicated (7) in which the pages, on which the data to be treated are described in predefined spaces (12,12') are inserted (8).

The transparent envelopes (7) are highlighted in the figure, **equivalent to sheets** inside of which are contained the hard pages (8). The envelopes are in a relaxed position with the front of page four in evidence, except the first which shows the "turned" position and the "back" of page three. The writing lines allocated in the spaces (12), are reproduced on these last two pages in activated position, conventionally dominant (A, B, C, ...*N*) for the "front" and "back" pages.
In the figure, metallic brackets (9, 10) for the anchorage of the envelopes (7) are represented and the hinges placed on the axis (p) of the keyboard (4); the brackets and the hinges permit the envelopes (pages) to be turned at 180 degrees to the keyboard (4).

In **Fig. 2** a known electric circuit is schematised, activated by the series of keys (5, 6) of the keyboard (4) and the contacts that are automatically activated by the envelopes (7), during the operation of "**Page Turning**".

### Drawing 2/3 containing Figure 3 and Figure 4

In **Figure 3** the relationship between the principal components is highlighted in a specific way:
- Envelopes (7), containing **front** pages (8) and **back** pages of a **sheet of paper;**
- The central position of the keyboard (4) assumed in respect to the front and back pages of the sheets of paper;
- Alignment between the spaces (12, 12') of each page and the related series of the keys (5) (6);
- The coupling of the metallic brackets (9, 10) with the relative transparent envelopes (7). In section B-B the fastening of the appendix (a) of the brackets (9, 10) is visible on the envelopes themselves.
- The hinging of the brackets (9, 10) on the hinges (19) placed on the axis (p) of the keyboard (4), with the rotation of 180 degrees in respect to keyboard itself;
- The arrangement of the brackets (9, 10) on the relative assembling groups (20, 21) whose composition is illustrated in detail in Fig.4;
- The assumption of **identification between the ordinates** (A, B, C, *N*) of the spaces (12, 12') and those of the keys (5,6) flanked by them.

In **Figure 4** highlights the composition of the group (20) and the symmetric one (21), in which it is shown that other than the articulation in (p) of the brackets, the realisation of an automatic way for obtaining signals of "sheet counter" or rather of the page-counter whose known circuit is illustrated in Fig.2,
The bracket (9) shows in fact the electric contact that is produced between the metallic surfaces (13,14) the printed circuit of the identity-disc; the identity-disc is at double-face with an identical circuit for the successive bracket of another sheet. This detail (15) represents an insulating separator between the other pages laid above.

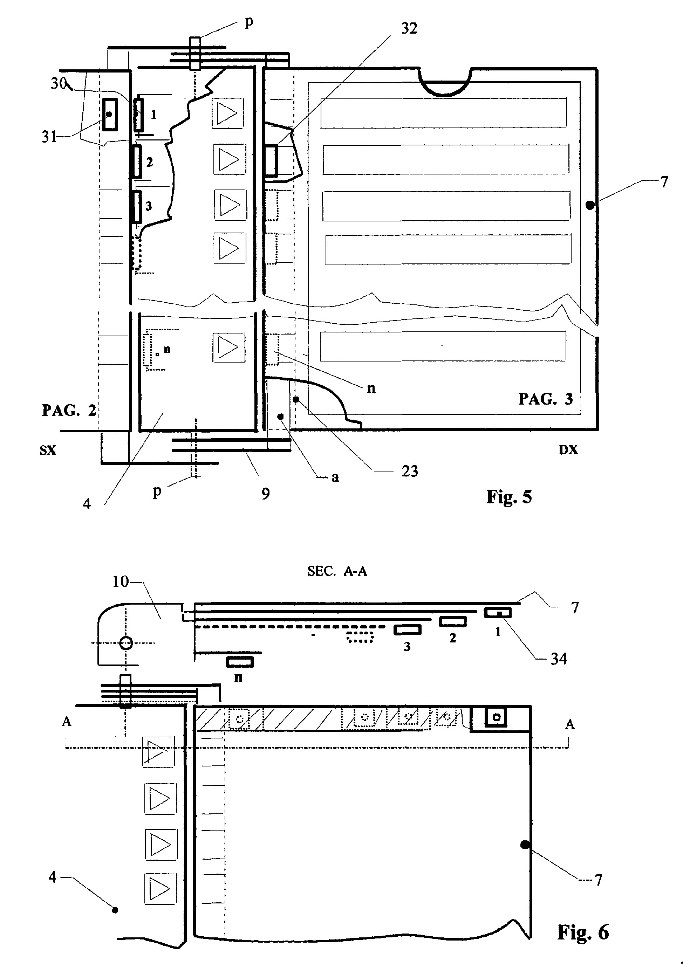

### Drawing 3/3 containing Figure 5 and Figure 6

The functions that permit the automatic functioning of the "**page counter**" in another way are illustrated in **Fig.5.** They are therefore highlighted in a transparent envelope (7) containing pages with registrations both in Front and Back articulated with metal brackets on hinges placed on the axis (p) of the keyboard (4) with a supporting function of the envelopes (7) to allow the "Page turning".

A small permanent magnet (31) for each envelope is lodged in an appropriate site drawn on the internal margin of the envelopes and is staggered vertically. In correspondence to the left side of the equipment, electric contacts in phials (31) are arranged, known and activated by the respective small magnets of the envelopes; the two components are complementary and the same in number as the envelopes.
The position of the contacts (30/1,2,3,....*N*) and the position of the small magnet relative to the first sheet, or rather pages 1 - 2 is highlighted in the section on the top left side.

The position of the contacts (30) is functional to the consumption of electric energy, in fact with the envelopes in a relaxed position, the contacts are not activated.
**Figure 6** illustrates the components that allow a further way of obtaining the "Sheet counting", or rather the page-counting, for the generation of the relative electric signals.
The transparent envelopes (7) articulated at the relative brackets (10) hinged along the axis (p) of the keyboard (4) are highlighted. In correspondence to the upper border of the envelopes (7) the optical sensors (34/1,2,3,...*N*), known, are opportunely stationed, also indicated from section A-A. The same section highlights that each sensor is activated automatically, in sequence by its own envelope, or rather by its own pages when they are "turned".

## Claims

1. This refers to the electronic acquisition of data or item *n* described on the **appropriate space** of a **sheet of paper** *n,* through the typing of **only one key,** belonging to a keyboard with anonymous operating keys of a limited number.
The parts used are known, but their combination and their particular characterisation that allows the realisation of the above-mentioned performance is claimed.
The said parts are:
• The memory of the known invention, with the registration of data to be treated recognized by a **Space ordinate** containing writing lines and a **Page ordinate** containing the spaces themselves;
• **A hard page (sheet of paper)** (8) Fig.3, **characterised by** being divided into "**Spaces**" (12) at constant interval, each one of which can receive defined writing lines. **Each space** is recognised by a **progressive ordinate** (A,B,C,...*N*) that will be aligned to the key series (5,6) of the operating keyboard (4). The page is further **characterised by** a **page ordinate** that corresponds to the **page number** itself (pag. 1, pag. 2, pag. 3, pag. *N*).
• Such articulations correspond to what is registered in memory.
The Space ordinate, united to that of the page, produces the **coordinates that identify the space itself**. All the pages of the device whether "front" or "back" are **characterised by the coordinates**:
| | | | |
|---|---|---|---|
| A ― pag.1, | B ― pag.1, | C ― pag.1, .... | Space *N* ― pag.1. |
| A ― pag.2, | B ― pag.2, | C ― pag.2, .... | Space *N* ― pag.2. |
| A ― pag.3, | B ― pag.3, | C ― pag.3, .... | Space *N* ― pag.3. |
| ..... A ― pag.*N,* | B ― pag.*N,* | C ― pag.*N, ...* | Space *N* ― pag.*N.* |
• **Keyboard (4)** fig.3 is **characterised by** its central location in between the positions assumed by the "front" and "back" pages and by being composed of two series of keys destined to the spaces of the "front" pages and the "back" pages respectively. In their own time **the key series** are **characterised by**:
o **The vertical pass** is constant and coincides with **the one of the Spaces** (12), containing the items to be treated;
o **Keys** that are anonymous and conventionally assume the same denomination and electronic **function** of the content described in the space (A,B,C,...*N*), so that switching on one of the keys is equivalent to the acquisition of the corresponding space ordinate;
o **Switching on** of an electric circuit of a known key in Fig. 2, that makes the known electronic parts to acquire the Space **ordinate** and **simultaneously** the reading of the **page ordinate,** at the same time activated for the reading (pag.1, pag.2, pag.3, ...pag.*N*). Rather the **ordinates make the writing lines contained in that space and only in that space to be recognised in the memory**;
• Transparent Plastic **Envelopes** (7), intended for receiving the "front" page and the "back" page, to which the mechanic consistence is conferred allowing their anagement and reading by the operator. They are closed on three sides, the lateral ones and the lower ones. A buttonhole (23) is made in correspondence to one of the lateral sides for the anchorage of the envelope itself to two metal brackets (9, 10) through appendices (a) inserted in the buttonhole (23) of the envelope itself; one on top and another at the base revolving at 180 degrees on the respective hinges allocated at the centre of the extremes of the keyboard (4).
The coupling of the **transparent envelopes ― brackets** with other known parts, allow the management of the functioning **characterised by**:
• **The aligning of the space ordinates** (A, B. C, *N*), of the "**front**" **pages** to the series of the keys (A,B,C,...*N*) on the right (6). Likewise it is brought about with the "**back**" **pages** in respect to the keys (5) on the left. Consequently the alignment brings about a condition that a key and only that key, corresponds to each Space of the page.
• **Automatic signalling of the ordinates of the sheets of paper legible by the operator,** or rather of the pages (pag.1, pag.2, pag.3, ....pag.*N*). This is carried out by revolving the envelope to 180 degrees from the relaxed position that allows one or both of the metallic brackets (9, 10) to close the relative electric circuit, in that way modifying the signal that indicates the **available sheet** which from level 0 it is brought to 1 and vice versa; the signal will be acquired together with the one of space brought about by the corresponding key. (Performance is an object of Claim 2).
From this, it can be deduced that: when an operator has identified the page and the space of the page containing the item to be acquired by the device, typing the key to which it corresponds, acquires the contents of the Space itself.
Looking back at the case, illustrated in Fig,1; to acquire the item "GRILLED MEAT", the operator types the corresponding key with ordinate (B6) coinciding with the same ordinate (B) of the space containing the item "GRILLED MEAT"; the same key likewise provokes the automatic reading of the page ordinate (pag.3) that, known electronic parts interpret as an only coordinate B6 / pag.3.

2. In an object or device "Menú Informatico" Fig.1, it is necessary to signal, automatically, with an electric signal, the number of active sheets with pages legible by the operator, the characteristics of the Hard page (8) fig.3 of the plastic envelope (7) and of the Operating keyboard (4) claimed in Claim 1, that, united with other known parts, they signal their numeric sequence of the relaxed position (0) or active position (1), using devices (Fig.5) **characterised by**:
• **Metallic Brackets** (9) fig.4 hinged on the hinges (19) with the possibility of revolving on them. The brackets in a relaxed position are always in contact with one (14) of the two isolated and adjacent (13.14) metallic surfaces of a printed circuit (22). Revolving the brackets, with note means, from the relaxed position (9) to the active one (9'), the brackets themselves short-circuit the two surfaces (13 and 14), producing an electric signal that from level 0 is brought to 1, and vice versa.
• **Similar multiple and independent signals,** are obtained by completing the printed circuit (22) in double face and adding on more of the same circuits and brackets on the same hinge (19) of the axis (p); an insulating separator (15) is interposed at a every double circuit, to avoid eventual improper signals between metallic brackets and the exposed surfaces (22,22') not activated consecutively.
Consequently the device carries out the following conditions and signals:
| Sheet or envelope in sequence | (Pag.) | Signal | |
|---|---|---|---|
| | 1 | 1-2 | 0-1 |
| | 2 | 3-4 | 0-1 |
| | 3 | 5-6 | 0-1 |
| | .. | .... | .... |
| | *N* | *N* + 1 | 0-1 |

3. In an appliance or a device "Menú Informatico" Fig.1, it is necessary to signal **the number of active sheets** or rather the pages that are legible by the operator, automatically, with an electric signal. The characteristics utilised are those of the hard page (sheet of paper) (8) fig.3 of the plastic envelope (7) and of the operating keyboard (4), claimed in claim 1, which when united with other known parts, **signal** their numeric sequence of the relaxed position (0) or active position (1), **utilising** devices (Fig.5) **characterised by**:
• Transparent plastic envelopes (7) Fig.5 anchored to the metallic brackets (9, 10) revolved at 180 degrees on the hinges that are placed on the central axis (p) of the keyboard (4), incorporating **permanent Magnets in miniature** (31), fixed to each envelope in the appropriate location (32) made on the margin of the envelopes themselves (7);
• **Ferrous electric contacts in phials** (30), known, each one corresponding to an envelope or rather sheet (1,2,3,...*N*), mounted in correspondence to the magnets, but in a position opposite the relaxed one of the envelopes themselves.
Predisposing as described above, it will be verified that **revolving an envelope by 180 degrees,** from the relaxed position (signal 0) in that of activated sheet (signal 1), the corresponding magnet flanked by the electric contact (30), closes the contact itself by its magnetic field. **In this way the signal of the number of active sheets is predisposed**, such that, with the typing of an operating key (5,6), will be automatically activated.
Consequently the device carries out the following conditions and signals:
| Sheet or envelope in sequence | (Pag.) | Signal | |
|---|---|---|---|
| | 1 | 1-2 | 0-1 |
| | 2 | 3-4 | 0-1 |
| | 3 | 5-6 | 0-1 |
| | .. | .... | .... |
| | *N* | *N* + 1 | 0-1 |

4. In an appliance or a device "Menú Informatico" Fig.1, in which it is necessary to signal **the number of active sheets** or rather the pages that are legible by the operator, automatically, with an electric signal, the characteristics of the hard page (sheet of paper) (8) fig.3 and the operating keyboard are utilised together with other parts claimed in Claim 1.
In particular, the transparent Fig.5 plastic envelopes (7) anchored to the metallic brackets (9, 10) revolving by 180 degrees on the hinges that are placed on the central axis (p) of the keyboard (4), **signal** their numeric sequence and relaxed position (0) or active position (1), utilising devices (Fig.6), **characterised by**:
• Known **Optic sensors** (34), are allocated in the body in a site below the border of the envelopes (7). The sensors are equal to the envelopes in number and in the (1,2,3,.....*N*) sequence in a way that corresponds to the progressive number of the envelope itself;
• The edge of the transparent envelopes (7) above the sensor is removed sequentially in a way that the first envelope covers all the sensors, the second all the sensors except the second, the third all the sensors except the third etc, etc, the *N* envelope covers all except the *N* sensor. A normal electronic device manages and recognises the sensors that are **covered from those that are not covered**.
Predisposing as described above, it will be verified that by **revolving an envelope by 180 degrees,** from the relaxed position to that of active sheet the corresponding sensor (1) becomes uncovered by the edge of the envelope and therefore activated to the light. In this way, the **page ordinate signal** gets predisposed, so that with the typing of an operating key (5,6), it will be automatically activated.
Consequently the device carries out the following conditions and signals:
| Sheet or envelope in sequence | (Pag.) | signal | |
|---|---|---|---|
| | 1 | 1-2 | 0-1 |
| | 2 | 3-4 | 0-1 |
| | 3 | 5-6 | 0-1 |
| | ... | .... | .... |
| | *N* | *N* + 1 | 0-1 |
